# EUROPÄISCHE PATENTSCHRIFT

(11) **EP 0 781 638 B1**
(45) Veröffentlichungstag und Bekanntmachung des Hinweises auf die Patenterteilung: **14.11.2001**
(21) Anmeldenummer: 96119677.1
(22) Anmeldetag: 09.12.1996
(51) Int. Cl.: B29B 13/06, F26B 17/10, F26B 17/14, C08J 9/22, C08L 25/04

(54) **Verfahren zur Trocknung und Konditionierung von expandierbaren Styrolpolymerisaten und Vorrichtung zur Durchfürung des Verfahrens**
Method of drying and conditioning of expandable polystyrene and device for this method
Procédé et dispositif de séchage et de conditionnement de polystyrène expansible

(30) Priorität: 27.12.1995 DE 19548515
(43) Veröffentlichungstag der Anmeldung: 02.07.1997
(73) Patentinhaber: Buna Sow Leuna Olefinverbund GmbH, 06258 Schkopau (DE)
(72) Erfinder: Hamann, Bernd, Dr., 06258 Schkopau (DE); Bageritz, Hans, 06122 Halle (DE); Klodt, Rolf-Dieter, Dr., 06246 Bad Lauchstädt (DE); Boger, Jürgen, 06124 Halle (DE); Winzheimer, Bodo, 06217 Merseburg (DE); Lehmann, Reinhard, 06124 Halle (DE)

(56) Entgegenhaltungen:
- WO-A-91/16185
- DE-A- 1 604 339
- DE-A- 3 215 549
- DE-A- 3 730 382
- DE-C- 4 104 418
- FR-A- 1 105 336
- GB-A- 1 362 927
- US-A- 3 544 091
- US-A- 3 986 270
- US-A- 5 443 539
- DATABASE WPI Section Ch, Week 8946 Derwent Publications Ltd., London, GB; Class A32, AN 89-335742 XP002098785 & JP 01 249408 A (KANEGAFUCHI CHEM KK) , 4. Oktober 1989

## Beschreibung

Die Erfindung betrifft ein Verfahren zur zweistufigen Trocknung und Konditionierung von expandierbarem Styrolpolymerisat (EPS ), welches im wesentlichen in Form von Perlen vorliegt gemäß dem Oberbegriffs des Anspruchs 1 und eine Vorrichtung, in welcher diese Prozesse durchgeführt werden gemäß dem Oberbegriff des Anspruchs 4.

Die großtechnische Herstellung expandierbarerer Styrolpolymerisate erfolgt üblicherweise durch Suspensionspolymerisation von Styrol bei gleichzeitigem oder anschließendem Zusatz geeigneter Treibmittel in einer wässrigen Trägerphase. Das dabei entstehende treibmittelhaltige Perlpolymerisat stellt eine Mischung unterschiedlicher Korngrößen überwiegend im Bereich von 0,1 - 3,0 mm Perldurchmesser dar. Durch geeignete rezepturielle und hydrodynamische Maßnahmen lassen sich Verteilungsbreite und Lage des Maximums dieser Korngrößenverteilung im erforderlichen Bereich steuern.Die Abtrennung des Perlpolymerisates von der wässrigen Phase der hergestellten Suspension erfolgt üblicherweise durch Zentrifugieren mit anschließendem Waschen. Zur Entfernung äußerer und ggfs. innerer Restfeuchtigkeit wird allgemein eine Trocknung im warmen Gasstrom angewendet.

In der DE 41 04 418 C1 wird dazu für besonders feinkörniges Material ein Verfahren gemäß dem Oberbegriff des Anpruchs 1 beschrieben, bei welchem das aus dem Suspensionsabwasser abgeschiedene Polymerisat in einem nachfolgenden Trockenprozeß aufbereitet wird. Das Styrolpolymerisat mit einer Teilchengröße zwischen 0,02 und 0,3 mm, dessen Hauptwassermenge auf mechanischem Weg entfernt wurde, wird bei einer Temperatur zwischen 70 und 100°C in einem Gasstrom im Stromtrockner bei einem Verhältnis Gas zu Feststoff von 2 bis 40 kg/kg in einer ersten Stufe getrocknet. In einer zweiten,als Wirbelbett ausgebildeten Trocknungsstufe, wird das Polymerisat in einem separaten Gasstrom (vzw. Stickstoff) mit einer Temperatur zwischen 15 und 60°C bis auf die gewünschte Restfeuchte getrocknet und ggfs. mit Zusatzstoffen beschichtet.

In der DE-A-25 10 943 wird ein zweistufiges Verfahren beschrieben, bei welchem die Trocknung in evakuierten Behältern, z.Tl. unter Beheizung und Durchmischung und bei erhöhten Verweilzeiten bei gleichzeitiger Teilkondensation der pentanhaltigen Trocknungsgase erfolgt.

Den bekannten Verfahren zur Trocknung von Styrolpolymerisaten nach der Vorentwässerung liegt der Gedanke zugrunde, daß sie vorbehandelte erwärmte Luft oder andere geeignete Gasströme nutzen. Im Verhältnis zum zu trocknenden Produkt werden hierzu entweder große Gasmengen oder aufwendige Anlagen mit rotierenden Teilen benötigt. Zum Erreichen der Trocknungstemperaturen nach den bekannten Verfahren ist für das Erwärmen der großen Luftmenge zusätzlich eine große Energiemenge erforderlich.

Außerdem beeinflussen die bekannten Trocknungsverfahren häufig die Eigenschaften des EPS-Kornes in unerwünschter Weise beim späteren Verschäumen, was dann zu negativen Auswirkungen auf die Eigenschaften der entstehenden Schaumstoffe führen kann.

Bei Trockenverfahren mit sehr kurzen Kontaktzeiten des Trockengutes mit dem Trocknungsgas,wie z.B. in Stromtrocknern, wird im wesentlichen nur das Oberflächenwasser entfernt, sog. Innenwasser, was je nach angewandter Polymerisationsrezeptur in Konzentrationen bis zu >1 Ma.-% in den EPS-Perlen enthalten sein kann, wird jedoch nur allmählich freigegeben und somit bei alleiniger Anwendung dieser Trockentechnologie nicht in ausreichendem Umfang entfernt.Das kann zu unerwünschten Feuchtigkeitskonzentrationen an ungünstigen Stellen in Lager- und Transportbehältern führen und andererseits auch das Förderverhalten und ggfs. die Verarbeitungseigenschaften des EPS beeinträchtigen. Sehr kurze Verweilzeiten in Trocknern nach den bekannten Verfahren bewirken außerdem, daß eine ungleichmäßige Treibmittelverteilung in den EPS-Perlen, die nach bestimmten Verfahrensweisen am Ende der Polymerisationsstufe nach dem Abkühlen der Suspension und der Abtrennung des wässrigen Suspensionsmediums entstehen kann, quasi eingefroren wird, was dann zusammen mit ggfs. vorhandenem erhöhten Innenwassergehalt, Strukturdefekte und Schrumpferscheinungen beim Verschäumen der Perlen verursacht. Derartige Verhältnisse wirken sich besonders nachteilig bei flammschutzmittelhaltigen Produkten mit Perlgrößen >1 mm aus, die vorzugsweise zur Herstellung von Schaumstoffblöcken eingesetzt werden. Bei der Anwendung höherer Trockentemperaturen, insbesondere ≥ 45° C oder / und Vakuum zur Trocknung, besteht die Gefahr, daß neben der Entfernung von Feuchtigkeit gleichzeitig Anteile des niedrigsiedenden Treibmittels aus den Perlen diffundieren, was zu einer ständigen Störung des Verteilungszustandes von Treibmittel im Polystyrol führt. Beim Verschäumen derartiger Produkte können neben Schrumpferscheinungen inhomogene Zellstrukturen im gebildeten Schaum entstehen. Derartige Produkte weisen häufig Nachteile in der Festigkeit und in ihren Wärmedämmeigenschaften auf. Trocknungsverfahren unter Anwendung von Wirbelbett-Technologien besitzen ein vergleichsweise breites Verweilzeitspektrum. Dadurch werden die einzelnen treibmittelhaltigen Polymerisatperlen unterschiedlich lange den Austauschprozessen ausgesetzt, was ebenfalls zu den beschriebenen Nachteilen führen kann.

Der Erfindung liegt die Aufgabe zugrunde, ein zweistufiges Verfahren zur Trocknung und Konditionierung für vorentwässerte expandierbare Styrolpolymerisate mit einer mittleren Teilchengröße zwischen 0,1 und 3,0 mm, vorzugsweise zwischen 0,4 - 2,5 mm, und einer Restfeuchte von ca. 2% zu entwickeln, welches den spezifischen Energieverbrauch in der Trocknungsstufe senkt. Gleichzeitig soll damit die, für gute Verabeitungseigenschaften des EPS zu Schaumstoffen erforderliche Gleichverteilung und Gleichgewichtseinstellung des im Polystyrol gelösten Treibmittels bewirkt werden, wodurch eine aufwendige nachträgliche Ablagerung der gesiebten EPS-Fraktionen nicht erforderlich ist.

Gleichfalls besteht die Aufgabe in der Schaffung einer speziellen Vorrichtung für die zweite Stufe dieses Verfahrens zur schonenden Trocknung und Konditionierung des EPS.

Diese Aufgaben werden gelöst durch ein Verfahren gemäß dem Anspruch 1 und eine Vorrichtung gemäß dem Anspruch 4.

Partikelschaumstoffe aus Polystyrol haben als Wärme- und Schalldämmstoffe und als Verpackungsmaterial große technische Bedeutung erreicht. Sie werden durch mehrstufiges Verschäumen des treibmittelhaltigen Perlpolymerisates und anschließendes Verschweißen zu Formteilen erzeugt.

Die Herstellung des treibmittelhaltigen Styrolpolymerisates erfolgt in Gegenwart üblicher öllöslicher Radikalbildner. Als Suspensionsstabilisatoren werden schwerlösliche anorganische Salze, wie Tricalciumphosphat etc., die in Verbindung mit hydrophobierend wirkenden sog. Extendem unter definierten Bedingungen amphiphile Assoziate bilden, und organische Schutzkolloide, wie z.B. PVA, verwendet. Diese Systeme besitzen, wenn sie unter definierten Bedingungen hergestellt und angewendet werden, eine ausreichend grenzflächenstabilisierende Wirkung für die in bestimmten Stadien nahe an der kolloidchemischen Stabilitätsgrenze ablaufende Suspensionspolymerisation zur Herstellung von treibmittelhaltigen, expandierbaren Styrolpolymerisaten.

Diese bestehen aus Polystyrol und / oder einem Copolymeren mit mindestens 50 Gew.-%, vorzugsweise mindestens 80 Gew.-% einpolymerisiertem Styrol. Comonomere können beispielsweise α-Methylstyrol, kernhalogenierte Styrole, kernalkylierte Styrole,Ester der Acryl-oder Methacrylsäure von C₁ - bis C₈ -Alkoholen, Acrylnitril, N-Vinylcarbazol sowie Ester oder Anhydride ungesättigter Dicarbonsäuren sein, die zusammen mit Styrol in genannter Weise in Suspension polymerisiert werden.

Die Styrolpolymerisate besitzen im allgemeinen Molekulargewichte M_{w} (Gewichtsmittel ) gemessen nach der GPC-Methode entspr. DIN 55 672 im Bereich von 150 000 bis 250 000. Zur Einstellung gewünschter Polymer- und Verarbeitungseigenschaften können geringe Mengen eines Vernetzers,wie z.B. Divinylbenzol oder Butandioldiacrylat in Mengen von ca. 0,005 bis 0,05 Mol-%, bezogen auf Styrol bzw. Monomere oder eines geeigneten Reglers mit Übertragungskonstanten k₀ im Bereich von 0,1 - 50, in Mengen von ca. 0,01 bis 0,5 Gew.-%, bezogen auf Monomere, mit zur Polymerisation eingesetzt werden. Als Treibmittel werden vorzugsweise 3 - 8 Gew.%, bezogen auf das Styrolpolymerisat, eines C₃ - C₈ - Kohlenwasserstoffs wie z.B.n-Butan, iso-Butan, n-Pentan, iso-Pentan, Neo-Pentan und/oder Hexan oder deren Gemische vor, während oder nach der Polymerisation, vorzugsweise nach Abschluß der sog. Kornbildungsphase, zugegeben.

Die treibmittelhaltigen, expandierbaren Styrolpolymerisate können außerdem zur Erzielung bestimmter Verarbeitungs- und Anwendungseigenschaften, Hilfs- und Zusatzstoffe wie Flammschutzmittel und Synergisten, Gleitmittel, Verarbeitungssteuerstoffe, Füllstoffe und Stabilisatoren in bekannten wirksamen Mengen im Inneren oder an der Oberfläche der Polymerisat-Perlen enthalten.

Erfindungsgemäß gelangt das aus der Suspension mittels Zentrifuge abgetrennte perlförmige treibmittelhaltige Styrolpolymerisat mit einem Restwassergehalt von ca. 2% über eine Aufgabevorrichtung in die erste, als Stromtrockner ausgelegte, Stufe des Trocknungsprozesses. Dabei erfolgt die Vortrocknung in einem ersten Luftstrom. Dieser wird auf eine Eingangstemperatur von 20 bis 40 °C, vorzugsweise 20 bis 30 °C, eingestellt. Das Verhältnis zwischen Trocknungsluft und Styrolpolymerisat beträgt in dieser Stufe 1,3 bis 1,9 kg/kg.

Überaschenderweise kann trotz der niedrigen Eingangstemperatur und des verhältnismäßig hohen Feststoff Trocknerluft -Verhältnisses schon in dieser Stufe eine Restfeuchte des Styrolpolymerisates von ca.0,3 - 0,4%, bezogen auf das gesamte Kornspektrum, erreicht werden. Die Verweilzeit des Styrolpolymerisates in dieser Stufe beträgt 0,05 bis 0,2 min. Nach der Abtrennung des Feststoffes von der Trocknerluft gelangt das Styrolpolymerisat direkt in die zweite Trocknungs- und Nachbehandlungsstufe. In dieser, kontinuierlich vom Produkt durchlaufenen Vorrichtung, gem. Anspruch 4 bis 8, wird bei Verweilzeiten des EPS von 240 bis 480 min, überraschenderweise eine weitere Senkung der Restfeuchte um cä. 0,1 bis 0,25 Ma.-% und gleichzeitig eine einheitliche Verteilung des Treibmittels in allen Polymerisat-Perlen,d.h. eine prozeßspezifische Einstellung des Verteilungs-Gleichgewichts von Treibmittelgemisch im Polystyrol erreicht.

Dabei kann zusätzlich in gewissen Grenzen der Treibmittelgehalt im Styrolpolymerisat in gewünschter Weise korrigiert werden. Hierzu werden im Gegensatz zu bekannten Verfahren weder ein Wirbelbett-Trockner mit den dazu nötigen großen Mengen an Trocknerluft, noch aufwendige Zwischenbunkeranlagen oder andere kostenintensive technische Vorrichtungen benötigt.

Das Verhältnis zwischen Trocknungsluft und Styrolpolymerisat beträgt in dieser Stufe 0,15 bis 0,6 kg/kg. Der zweite Luftstrom mit einer Eingangstemperatur von ebenfalls 20 bis 40°C, vorzugsweise 20 bis 30°C, wird in mehrere Einzelströme aufgeteilt und dem Styrolpolymerisat in verschiedenen übereinanderliegenden Ebenen zugeführt und zwischen diesen abgeführt. Damit wird das Styrolpolymerisat während des Durchlaufes durch die zweite Trocknungsstufe im Gleich- bzw. Gegenstrom und durch die Aufteilung des Gesamtstromes der Trocknerluft in Teilströme, ständig mit einer geringen Menge an Trocknungsluft umspült. Neben der gewünschten Endfeuchte wird hierbei auch die gewünschte Gleichverteilung des Treibmittelgemisches in den Perlen des Styrolpolymerisates erreicht, die mit den bekannten Trocknungsverfahren gleichzeitig nicht möglich ist.

Die Vorrichtung zum Trocknen und Nachbehandeln des Styrolpolymerisates in der zweiten Trocknungsstufe ist ein senkrecht aufgestellter Behälter mit einem Verhältnis von Höhe zur lichten Weite von mindestens 3,5, welcher einen oberen Produkteintritt und einen unteren, vorzugsweise spitzwinkligen, Produktaustritt aufweist, wobei das Innere des Behätterteiles mit parallelen Wänden in horizontalen Ebenen abwechselnd Begasungsböden und Entgasungsböden enthält, wobei sich in der Ebene am Produkteintritt und am Produktaustritt jeweils ein Begasungsboden befindet, die Be - und Entgasungsböden in Richtung des Produktaustrittes Gasöffnungen aufweisen und diese Gasöffnungen von in Richtung des Produktaustrittes offenen und in Richtung des Produkteintrittes sich verjüngenden geschlossenen Leiteinrizhtungen überdeckt werden. Derartige Vorrichtungen gemäß dem Oberbegriff des Anspruchs 4 werden auch in GB 1362927, US 5443539, FR 1105336 und US 3544091 beschrieben.

Gemäß dem kennzeichnenden Teil des Anspruchs 4 entspricht der Abstand der Be - und Entgasungsböden untereinander der lichten Weite des Behälters und sind, die Be - und Entgasungsböden konstruktiv gleich aufgebaut entspricht die Summe der Flächen der Gassöffnungen in einer Ebene ¹/₁₅ bis ¹/₂₅ der Querschnittsfläche des Behälters und entspricht die projizierte Fläche der Leiteinrichtungen in einer Ebene der Hälfte der Querschnittsfläche des Behälters. Neben einer intensiveren Umströmung der Polymerteilchen in der Ebene der Böden wird durch die Leiteinrichtung auch das Einzelkom zu den benachbarten verdreht, so daß die Kontaktstellen über die Behälterhöhe wechseln. Die Freie Querschnittsfläche der Luftöffnungen in den Böden beträgt ca. 1/20 der Querschnittsfläche des Behälters Bei Anwendung des erfindungsgemäßen Verfahrens zur Nachtrocknung und Konditionierung von EPS wird ein treibmittelhaltiges Polymerisat mit überraschend gleichmäßigen Eigenschaften und außerordentlich günstigem Verarbeitungsverhalten erhalten. Gegenüber vergleichbaren Verfahren liegen der spezifische Energieverbrauch und der Aufwand an technischen Einrichtungen wesentlich niedriger.

Die Erfindung wird an folgendem Beispiel 1 und den Vergleichsbeispielen A bis D näher erläutert.

### Beispiel 1

In einem druckfesten Rührgefäß, ausgerüstet mit Druck- ,Temperatur- und Rührleistungseintrag-Meßeinrichtung sowie automatischer Prozeßsteuerung, wird eine Mischung aus 110 Teilen Wasser, 100 Teilen Styrol, 0,34 Teilen Tricalciumphosphat, 0,0068 Teilen Na-Dodecylbenzolsulfonat, 0,39 Teilen Dibenzoylperoxid, 0,14 Teilen tert.Butylperbenzoat und 1.01 Teilen einer Mischung aus HBCD und Dicumylperoxid unter Rühren auf eine Temperatur von 89° C erhitzt. Nach 3,3 Stunden Rühren bei dieser Temperatur werden der Reaktionsmischung 0,125 Teile einer 7,5%igen wäßrigen Lösung eines teilverseiften Polyvinylalkohols mit einem Restacetatgehalt von 12 Mol% zur Stabilisierung der Suspension hinzugefügt. Danach werden 7,2 Teile eines überwiegend Pentan enthaltenden Treibmittelgemisches zudosiert und bei einer Temperatur von 115°C weitere 4 Stunden gerührt. Nach Abkühlen auf Raumtemperatur und Entspannen des Reaktors wird das gebildete treibmittelhaltige Perlpolymerisat aus der Suspension mittels Zentrifuge abgetrennt und vorbeschichtet, Trocknung und Konditionierung erfolgen mittels des nachstehend beschriebenen Verfahrens.

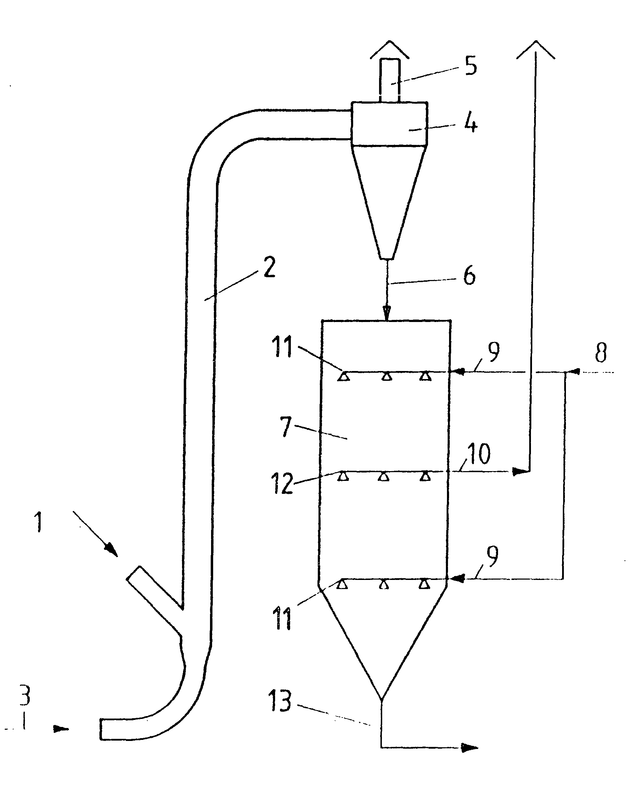

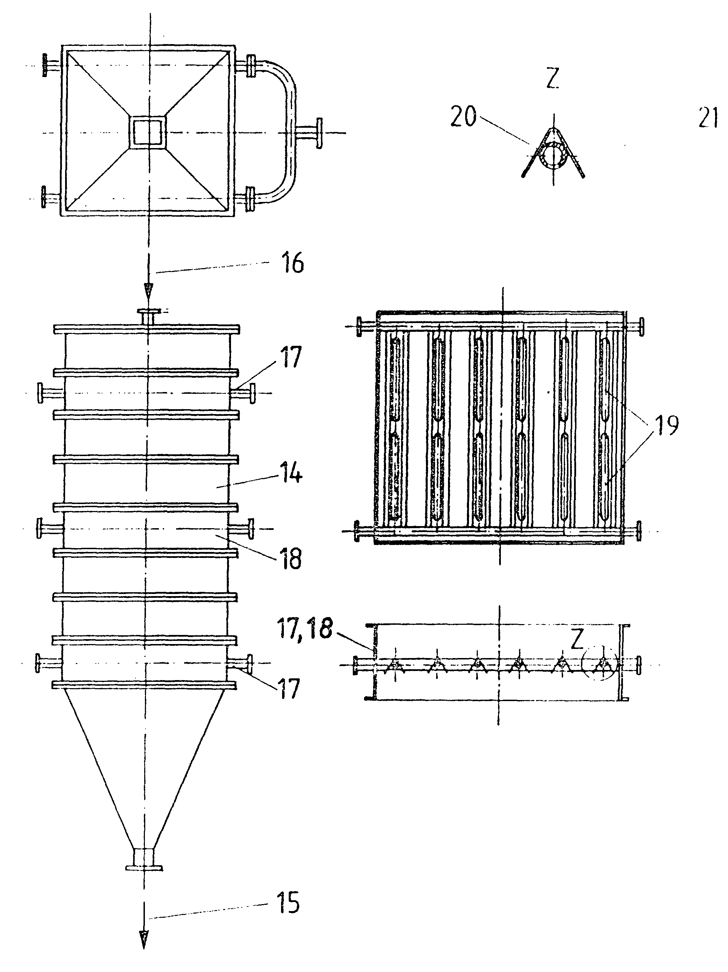

Figur 1 zeigt die Anordnung der notwendigen Ausrüstungen zur Durchführung des Verfahrens. Die Figur 2 stellt eine erfindungsgemäße Vorrichtung zur Behandlung von expandierbaren Polystyrol in der zweiten Prozeßstufe des erfindungsgemäßen Verfahrens dar.

Das über eine Zentrifuge vorentwässerte Styrolpolymerisat ***1*** (Restfeuchte etwa 1,7%) wird in den Stromtrockner ***2*** gefördert. Es erfolgt eine Durchmischung mit der Trocknungsluft ***3*** und der Transport in den Abscheider ***4*** zur Feststoffabtrennung. Die Eingangstemperatur der Trocknungsluft ***3*** beträgt 25°C und die Verweilzeit im Stromtrockner ***2 durchschnittlich*** 0,06 min. Das Verhältnis zwischen Trocknungsluft ***3*** und vorentwässertem Styrolpolymerisat ***1*** beträgt 1,8 kg/kg. Nach der Abtrennung von der Abluft ***5*** der ersten Prozeßstufe gelangt das Styrolpolymerisat ***6*** mit einer Restfeuchte von 0,37% in den Trocknungs- und Nachbehandlungsbehälter ***7*** der zweiten Prozeßstufe. Diesen durchläuft es innerhalb von 270 min, dabei wird der Restfeuchtegehalt wird auf Werte im Bereich von 0,15 bis 0,25% gesenkt. Über Belüftungsböden ***11*** gelangt die Trocknungsluft *8* der zweiten Stufe, aufgeteilt in Teilströme ***9,*** in den Trocknungs- und Nachbehandlungsbehälter ***7.*** Das Verhältnis der Trocknungsluft ***8*** zum Styrolpolymerisat ***6*** beträgt in der zweiten Stufe 0,2 kg/kg. Die Trocknungsluft ***8*** hat eine Eingangstemperatur von 25°C. Über den Entlüftungsboden ***12*** wird die Abluft ***10*** fortgeleitet. Im Bodenbereich wird das getrocknete und nachbehandelte Styrolpolymerisat ***13*** aus dem Trocknungs- und Nachbehandlungsbehälter ***7*** ausgetragen.

Der Trocknungs- und Nachbehandlungsbehälter ***7*** der zweiten Stufe ist gem. Figur 2 wie im folgenden beschrieben aufgebaut. Der senkrecht aufgestellte zylindrische Behälter ***14*** mit einem konischen Produktaustritt ***15*** weist im zylindrischen Teil ein Höhen - Durchmesser - Verhältnis von 4 auf. Der Produkteintritt ***16*** befindet sich auf dem Behälter ***14.*** Im Inneren des Behälters ***14*** sind Belüftungsböden ***17*** und ein Entlüftungsboden ***18*** angeordnet, der vertikale Abstand der Böden zueinander entspricht dem Behälterdurchmesser. Die Böden sind aus einer Anzahl von miteinander verbundenen Kanälen ***20*** aufgebaut und besitzen in Richtung des Produktaustrittes ***15,*** Öffnungen ***19*** für den Aus- bzw. Eintritt der Trocknungsluft bzw. Abluft. Überdeckt werden diese durch Leiteinrichtungen ***21*** für das Polymerisat, welche sich in Richtung des Produkteintrittes ***16*** verjüngen und im oberen Bereich geschlossen sind. Das Verhältnis der projizierten Fläche der Leiteinrichtung ***21*** eines Bodens zur Querschnittsfläche des Behälters ***14*** beträgt 0,5. Die freie Querschnittsfläche der Öffnungen ***19*** eines Bodens beträgt 5% der Querschnittsfläche des Behälters ***14.***

Das nach diesem zweistufigen Prozeß behandelste EPS wird anschließend gesiebt und mit weiteren Verarbeitungshilfsstoffen beschichtet. Die Kornfraktion von 1,0 - 1,6 mm wird in einem kontinuierlichen Vorschäumer vorgeschäumt.

Die gemessenen Werte für die Restfeuchte des EPS und die erreichbare Dichte der vorgeschäumten Perlen, der Anteil an deformierten Schaum-Perlen, die Schaumlamellen-Zahl und ihre Verteilung sind in Tab.1 den Werten der Vergleichsbeispiele gegenübergestellt.

### Vergleichsbeispiel A

Im Vergleichsbeispiel A erfolgt die Herstellung der EPS-Suspension und anschließende Fest-/ Flüssigtrennung in gleicher Weise wie im Beispiel 1.

Abweichend hiervon wird das zentrifugenfeuchte Produkt jedoch zunächst im Stromtrockner bei einer Temperatur von 70 °C getrocknet und anschließend noch im Wirbelbett bei einer Temperatur von 40°C, wie in der DE 41 04 418 C1 bevorzugt für die Trocknung von EPS-Rohmaterialien mit einer Korngöße von 0,05-0,3 mm beschrieben , nachbehandelt.

Das getrocknete EPS-Korngemisch weist einen geringen Feuchtigkeitsgehalt auf (Tab. 1). Der Gesamtenergieaufwand zur Trocknung ist jedoch vergleichsweise hoch. Die auf einen Korngrößen bereich von 1.0 - 1,6mm abgesiebten und gecoatetenPerlen wurden unmittelbar nach der Abfüllung in einem Vorschäumer vorgeschäumt.Die Schaumperlen weisen bei gleichen Vorschäum- und Coatingbedingungen wie in Beispiel 1 nur eine minimale Dichte von 15,1 g/l auf. Sie zeigen außerdem deutliche Anzeichen von Schrumpferscheinungen und besitzen eine vergleichsweise feine , jedoch inhomogene Schaumlamelleninnenstruktur (Tab. 1).

### Vergleichsbeispeil B

Im Vergleichsbeispiel B wird von dem gleichen zentrifugenfeuchten EPS-Material wie in den Beispielen 1 und Vergleichsbeispiel A ausgegangen.

Abweichend vom Vergleichsbeispiel A wird das zentrifugenfeuchte EPS unter Anwendung eines einstufigen Wirbelbettverfahrens bei einer Temperatur von 50°C und einer mittleren Verweilzeit von 10 min getrocknet.

Das getrocknete EPS-Pulvergemisch weist gegenüber dem erfindungsgemäßen Verfahren im Beispiel 1 einen erhöhten Feuchtigkeitsgehalt auf, was teilweise zu Stockungen bei der Zuführung des auf den Korngrößenbereich von 1-1,6mm abgesiebten und gecoateten EPS in den Vorschäumer führt. Die vorgeschäumten Perlen besitzen eine höhere Dichte , weisen eindeutige Anzeichen von Schrumpferscheinungen auf und zeigen eine heterogene Innenstruktur der Schaumlamellen.

### Vergleichsbeispiel C

Herstellung und Fest-/Flüssigtrennung des EPS-Basismaterials erfolgt im Beispiel C wie im Beispiel 1 beschrieben.Die erste Stufe der Trocknung ist ebenfalls identisch mit Beispiel 1. Im Gegensatz zu Beispiel 1 wird auf die erfindungsgemäße zweite Stufe der Nachbehandlung verzichtet.

Es wird ein Rohmaterial mit hoher Restfeuchte erhalten.Aufgrund des großen Anteils an geschrumpften Partikeln (Anteil eingefallener Schaumperlen > 30 %) und ihrer inhomogenen grobzelligen Innenstruktur bei unmittelbar nach Siebung und Coating vorgenommener Vorschäumung, kann das Material nicht sofort zu qualitativ hochwertigen Schaumstoffen verarbeitet werden. Erst nach 5 Tagen einer nachträglichen offenen Ablagerung des EPS-Rohmaterials in einem Zwischensilo gelingt es bei nochmalige Vorschäumung, runde , innen weitgehend homogene Schaumperlen zu erhalten.

### Vergleichsbeispiel D

Im Vergleichsbeispiel D wird von dem gleichen zentrifugenfeuchten EPS-Rohmaterial wie in den Beispielen 1 und A bis C ausgegangen.

Im Gegensatz zum Beispiel 1 wird auf die Vortrocknungsstufe verzichtet und das zentrifugenfeuchte EPS-Material sofort in das horizontale Nachbehandlungsrohr entsprechend erfindungsgemäßer Beschreibung geleitet.

Die Durchführung dieses Experiments ist von ständigen technischen Störungen begleitet, da das feuchte Produkt den Materialfluß beeinträchtigt.Von den zeitweise abgenommenen Materialproben werden sehr schwankende Feuchtigkeitsgehalte erhalten.

Ebenso differieren die Vorschäumeigenschaften stark untereinander, so daß diese Verfahrensweise für die Praxis nicht anwendbar ist.

Vergleichsbeispiele C und D dokumentieren , daß die Aufgabe nur unter vollständiger Anwendung der beiden erfindungsgemäßen Elemente des in Beispiel 1 beschriebenen Verfahrens, der Stufen der Vortrocknung und der Nachbehandlung und Konditionierung sowie der ebenfalls beschriebenen erfindungsgemäßen Vorichtung, befriedigend gelöst wird.

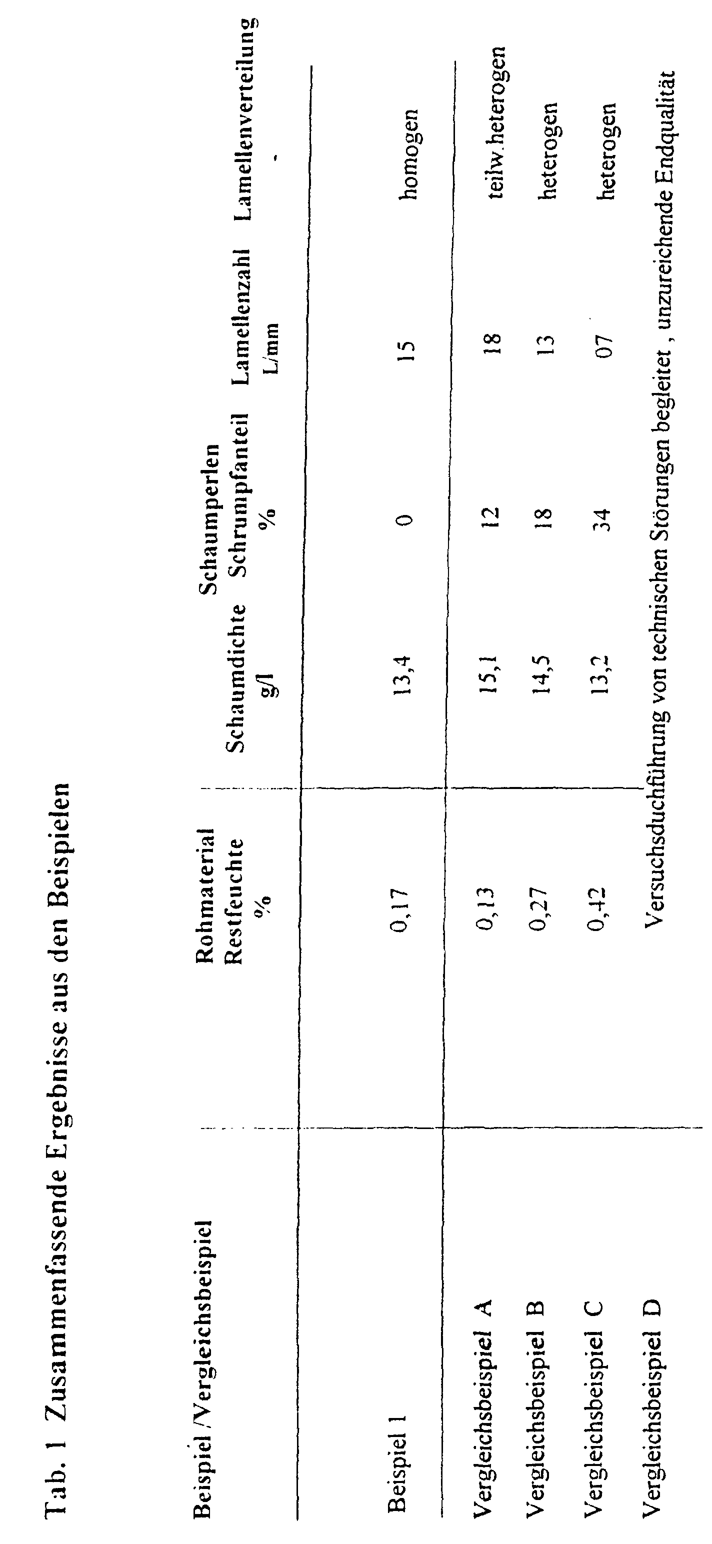

## Patentansprüche

1. Verfahren zur Trocknung und Konditionierung von expandierbaren Styrolpolymerisaten,die durch Suspensionspolymerisation in Gegenwart von Treibmitteln hergestellt und mittels Zentrifuge aus der Suspension abgetrennt werden, in einem zweistufigen Trocknungsprozeß, bei welchem in einer ersten Prozeßstufe expandierbares Styrolpolymerisat mit einem Restfeuchtegehalt von ca. 2% und mit einem mittleren Teilchendurchmesser von 0,1 bis 3,0 mm in einem ersten Gasstrom gemeinsam transportiert, von diesem abgetrennt und danach mit einem zweiten Gasstrom kontaktiert wird, **dadurch gekennzeichnet, daß** das expandierbare Styrolpolymerisat (1) dem ersten Gasstrom (3) mit einer Temperatur von 20 bis 40 °C ausgesetzt und in einem Verhältnis zwischen Gas und Styrolpolymerisat von 1,3 bis 1,9 kg/kg mit einer Verweilzeit von 0,05 bis 0,2 min durch einen Trockner (2) gefördert wird, das Styrolpolymerisat von dem ersten Gasstrom abgetrennt wird und die zweite Stufe (7) bei einer Verweilzeit von 240 bis 480 min vom Produkteintritt zum Produktaustritt abwärts durchläuft und dabei von einem zweiten Gasstrom (8) mit einer Temperatur von 20 bis 40 °C im Verhältnis zwischen Gas und Styrolpolymerisat von 0,15 bis 0,6 kg/kg im Gegen- und / oder Gleichstrom durchströmt wird, wobei der zweite Gasstrom in Einzelströme (9) aufgeteilt, dem Styrolpolymerisat in verschiedenen übereinander liegenden Ebenen zugeführt und die Einzelströme zwischen diesen Ebenen wieder abgeführt werden.

2. Verfahren nach Anspruch 1, **dadurch gekennzeichnet, daß** der erste (3) und zweite Gasstrom (8, 9) aus gereinigter Luft bestehen.

3. Verfahren nach Anspruch 1 und 2 **dadurch gekennzeichnet,daß** die Gaströme in der ersten und zweiten Prozeßstufe Temperaturen zwischen 20°C und 30°C aufweisen.

4. Vorrichtung zur Durchführung des Verfahrens gemäß den Ansprüchen 1 bis 3 in einem senkrecht aufgestellten Behälter (7, 14) mit einem Verhältnis von Höhe zur lichten Weite von mindestens 3,5, welcher einen oberen Produkteintritt (16) und einen unteren, vorzugsweise spitzwinkligen, Produktaustritt (15) aufweist, wobei das Innere des Behälterteiles mit parallelen Wänden in horizontalen Ebenen abwechselnd Begasungsböden (11, 17) und Entgasungsböden (12, 18) enthält, wobei sich in der Ebene am Produkteintritt (16) und am Produktaustritt (15) jeweils ein Begasungsboden (11, 17) befindet, die Be- und Entgasungsböden (11, 12, 17, 18) in Richtung des Produktaustrittes (15) Gasöffnungen (19) aufweisen und diese Gasöffnungen von in Richtung des Produktaustrittes (15) offenen und in Richtung des Produkteintrittes (16) sich verjüngenden, geschlossenen Leiteinrichtungen überdeckt werden, **dadurch gekennzeichnet, daß** der Abstand der Be- und Entgasungsböden (11, 12 17, 18) untereinander der lichten Weite des Behälters (7, 14) entspricht und die Be- und Entgasungsböden(11, 12, 17, 18) konstruktiv gleich aufgebaut sind, die Summe der Flächen der Gasöffnungen (19) in einer Ebene 1/15 bis 1/25 der Querschnittsfläche des Behälters (7, 14) entspricht und die projizierte Fläche der Leiteinrichtungen (21) in einer Ebene der Hälfte der Querschnittsfläche des Behälters (7, 14) entspricht.

5. Vorrichtung nach Anspruch 4, **dadurch gekennzeichnet, daß** der Behälter einen runden oder rechteckigen Querschnitt aufweist.

## Claims

1. A process to dry and condition expandable styrene polymers made through suspension polymerization in the presence of sponging agents and separated from the suspension by means of a centrifuge, in a two-stage drying process, in which expandable styrene polymer with a residual moisture of approx. 2% and a mean particle diameter of 0.1 mm to 0.3 mm is transported together with a first gas stream, after which it is separated from this gas stream and contacted with a second gas stream, whereby the expandable styrene polymer (1) is subjected to the first gas stream (3) at a temperature of 20°C to 40°C and routed through a dryer (2) in a ratio between the gas and the styrene polymer of 1.3 to 1.9 kg/kg at a retention time of 0.05 to 0.2 min., whereby the styrene polymer is separated from the first gas stream and flows through the second stage (7) at a retention time of 240 to 480 mins. from top to bottom from the product inlet to the product outlet and whereby a second gas stream (8) flows through the styrene polymer at a temperature of 20°C to 40°C and a ratio between the gas and styrene polymer of 0.15 to 0.6 kg/kg in a counter-current and/or co-current flow, whereby the second gas stream is divided into individual streams (9), routed to the styrene polymer in several levels one on top of the other, and whereby the individual streams are carried off between these levels.

2. A process according to claim 1 above, whereby the first gas stream (3) and the second gas stream (8,9) are composed of purified air.

3. A process according to claims 1 and 2 above, whereby the gas streams in the first or second process stages have a temperature of between 20°C and 30°C.

4. A device to perform the process according to claims 1 through 3 in a vertical vessel (7, 14) with a ratio between its height and clear width of at least 3.5 and containing an upper product inlet (16) and a lower, preferably acute-angled product outlet (15), whereby the interior of the vessel section with parallel walls on horizontal levels contains alternately gas injection trays (11, 17) and degasification trays (12, 18), whereby a gas injection tray (11, 17) each is arranged at the product inlet (16) and the product outlet (15), the gas injection and degasification trays (11, 12, 17, 18) having gas openings (19) towards the product outlet (15), which gas openings are covered by baffle plates which are open towards the product outlet (15) and tapered and closed towards the product inlet (16), whereby the spacing between the gas injection and degasification trays (11, 12, 17, 18) is equivalent to the clear width of the vessel (7, 14) and the gas injection and degasification trays (11, 12, 17, 18) are of identical design and whereby the total surface area of the gas openings (19) on any level from 1/15 to 1/25 is equivalent to the cross-sectional area of the vessel (7, 14), and whereby the projected area of the baffle plates (21) on any level is equivalent to one half of the cross-sectional area of the vessel (7, 14).

5. A device according to claim 4 above, whereby the vessel has a round or rectangular cross section.

## Revendications

1. Procédé de séchage et de conditionnement de polymères de styrène expansibles, lesquels sont produits par polymérisation en suspension en présence de gonflants et sont séparés de la suspension au moyen d'une centrifugeuse au cours d'un processus de séchage à deux phases, dans lequel dans une première phase du processus un polymère de styrène expansible avec une teneur d'humidité résiduelle de 2% environ et avec un diamètre moyen des particules de 0,1 à 3,0 mm sera transporté communément avec un premier courant gazeux, puis séparé de ce dernier avant d'entrer en contact avec un deuxième courant gazeux, **caractérisé par le fait que** le polymère de styrène expansible (1) sera soumis dans le premier courant gazeux (3) à une température de 20 à 40 °C et sera transporté dans un rapport en poids entre gaz et polymère de styrène de 1,3 jusqu'à 1,9 kg/kg avec un temps séjour de 0,05 à 0,2 mn au travers d'un sécheur (2), que le polymère de styrène sera séparé du premier courant gazeux et que la deuxième phase (7) se déroulera en aval depuis l'entrée du produit jusqu'à sa sortie avec un temps séjour de 240 à 280 mn, passant à travers un deuxième courant gazeux (8) dans le même sens et/ou dans le sens contraire à celui-ci par une température de 20 à 40 °C dans un rapport en poids entre le gaz et le polymère de styrène de 0,15 jusqu'à 0,6 kg/kg, le deuxième courant de gaz étant divisé en plusieurs courants divisés (9), qui sont amenés au polymère de styrène en plusieurs niveaux différents superposés et qui en seront retirés de nouveau entre ces niveaux.

2. Procédé selon la revendication 1, **caractérisé par le fait que** le premier (3) et le deuxième courant (8, 9) sont constitués d'air purifié.

3. Procédé selon les revendications 1 et 2 **caractérisé par le fait que** les courants gazeux dans la première et dans le deuxième phase de processus ont des températures situées entre 20°C et 30°C.

4. Dispositif servant à effectuer le procédé selon les revendications de 1 à 3 dans un récipient (7, 14) disposé verticalement dans un rapport de 3,5 au moins entre la hauteur et la surface de base intérieure, lequel dispose d'une entrée de produit en haut (16) et en bas d'une sortie de produit à angle aigu de préférence (15), l'intérieur du récipient étant doté dans sa partie parallèle des parois de plateaux parallèles horizontaux servant alternativement de plateaux d'entrée (11, 17) et de plateaux de sortie du gaz (12, 18), deux plateaux d'entrée de gaz (11, 17) se trouvant l'un au niveau de l'entrée du produit (16) et l'autre au niveau de la sortie du produit (15), les plateaux d'entrée et de sortie du gaz (11, 12, 17, 18) ayant des ouvertures de gaz (19) en direction de la sortie du produit (15) et ces ouvertures de gaz étant recouvertes de dispositifs de guidage ouverts dans la direction de sortie du produit (15) et fermés et s'aminciçant en direction de l'entrée du produit (16), **caractérisés par le fait que** la distance des plateaux d'entrée et de sortie du gaz (11, 12 17, 18) entre eux correspond à la surface de base du récipient (7, 14) et que les plateaux d'entrée et de sortie du gaz (11, 12, 17, 18) sont de construction analogue, que la somme des surfaces des ouvertures de gaz (19) correspondent dans un niveau à 1/15e jusqu'à 1/25e de la surface de section du récipient (7, 14) et que la surface projetée des dispositifs de guidage (21) correspondent sur un niveau à la moitié de la surface de section du récipient (7, 14).

5. Dispositif selon la revendication 4, **caractérisé par le fait que** le récipient présente une section ronde ou rectangulaire.
